# EUROPÄISCHE PATENTSCHRIFT

(11) **EP 3 830 930 B1**
(45) Veröffentlichungstag und Bekanntmachung des Hinweises auf die Patenterteilung: **28.06.2023**
(21) Anmeldenummer: 19744675.0
(22) Anmeldetag: 23.07.2019
(51) Int. Cl.: H02K 1/2781, H02K 1/27915

(54) **ELEKTRISCHE MASCHINE**
ELECTRIC MACHINE
MACHINE ÉLECTRIQUE

(30) Priorität: 27.07.2018 DE 102018212573
(43) Veröffentlichungstag der Anmeldung: 09.06.2021
(73) Patentinhaber: Robert Bosch GmbH, 70442 Stuttgart (DE)
(72) Erfinder: WILLIG, Matthias, 76137 Karlsruhe (DE)
(86) Internationale Anmeldenummer: PCT/EP2019/069792
(87) Internationale Veröffentlichungsnummer: WO 2020/020882

(56) Entgegenhaltungen:
- WO-A1-2017/001159
- DE-A1- 4 205 255
- DE-A1-102005 043 873
- DE-A1-102015 013 690
- US-A1- 2012 098 382

## Beschreibung

Die Erfindung betrifft eine elektrische Maschine umfassend einen Stator und einen vom Stator durch einen Luftspalt getrennten Rotor.

### Stand der Technik

Es sind elektrische Maschinen umfassend einen Stator und einem vom Stator durch einen Luftspalt getrennten Rotor mit schalenförmigen Magnetsegmenten aus der DE 10 2015 212 165 A1 bekannt. Die Magnetsegmente sind dabei jeweils paarweise gegenüberliegend angeordnet und weisen in Umfangsrichtung jeweils mehrere magnetisch unterschiedlich polarisierte Abschnitte auf. Die magnetisch unterschiedlich polarisierten Abschnitte bilden jeweils einen magnetischen Pol des Rotors. Ferner sind Ausnehmungen auf der dem Stator zugewandten Seite vorgesehen, welche als Polabhebungen dienen.

Die DE 10 2005 043 873 A1 offenbart einen gesinterten Ringmagnet mit einer im allgemeinen zylindrischen äußeren Oberfläche mit Oberflächenwellungen mit abwechselnden Vertiefungen und Erhebungen, die bezogen auf die Längsachse des Ringmagneten schräggestellt ausgebildet sind.

Die WO 2017/001159 A1 offenbart eine elektrische Maschine mit mehreren schalenförmigen Magnetsegmenten.

Die DE 10 2015 013 690 A1 offenbart eine Ringmagneteinheit mit zumindest zwei Magnetsegmenten.

Die DE 42 05 255 A1 offenbart eine permanenterregte Gleichstrommaschine mit vier Magnetpolen und einer schrägen Magnetisierung.

### Offenbarung der Erfindung

Die erfindungsgemäße elektrische Maschine umfasst einen Stator und einen vom Stator, insbesondere durch einen Luftspalt, getrennten Rotor. Der Rotor weist mindestens einen, insbesondere mehrere, an einem Rotorkörper befestigte schalenförmige Magnetsegmente auf. Die Magnetsegmente weisen jeweils mehrere magnetisch unterschiedlich polarisierte Abschnitte auf. Die magnetisch unterschiedlich polarisierten Abschnitte eines Magnetsegments sind in Umfangsrichtung des Rotors ausgebildet. Die magnetisch unterschiedlich polarisierten Abschnitte bilden jeweils einen magnetischen Pol des Rotors.

Zwischen den magnetisch unterschiedlich polarisierten Abschnitten der Magnetsegmente sind Übergangszonen ausgebildet, welche sich dadurch auszeichnen, dass sie magnetisch unpolarisiert, insbesondere magnetisch schwach polarisierte Abschnitte bilden. Die Übergangszonen werden bei der magnetischen Polarisierung nicht, insbesondere bewusst, polarisiert. Die Übergangszonen sind daher magnetisch unpolarisiert, bzw. magnetisch schwach polarisiert ausgebildet.

Ferner weist das Magnetsegment mindestens eine, insbesondere mindestens zwei, Ausnehmungen auf, welche sich insbesondere dadurch auszeichnen, dass der Abstand des Magnetsegments zum Stator im Bereich der Ausnehmung vergrößert ist und/oder dass die Dicke des Magnetsegments im Bereich der Ausnehmung minimiert ist. Die Ausnehmungen sind auf der dem Stator zugewandten Seite vorgesehen.

Vorteilhaft ist, dass die Übergangszonen in Axialrichtung des Rotors schräg verlaufend ausgebildet sind. Insbesondere zeichnet sich der schräge Verlauf durch die Ausbildung eines Winkels zwischen der Übergangszone und der Axialrichtung aus.

Ferner ist vorteilhaft, dass die Übergangszonen im Bereich der Ausnehmungen ausgebildet sind. Die erfindungsgemäße Ausgestaltung der elektrischen Maschine bewirkt eine Minimierung des Rastmoments, insbesondere des Nutrastmoments und damit verbunden der Drehmomentwelligkeit. Ferner können insbesondere auch Asymmetrien der induzierten Spannung vermindert werden. Ferner können neben der Grundordnung auftretende Rastmomente minimiert werden.

Erfindungsgemäß verlaufen die, insbesondere tangentialen, Randbereiche der Ausnehmungen in Umfangsrichtung parallel zur Axialrichtung.

Durch die in den Unteransprüchen aufgeführten Maßnahmen ergeben sich vorteilhafte Weiterbildungen und Verbesserungen der im Hauptanspruch angegebenen Merkmale.

Gemäß einer vorteilhaften Weiterbildung ist vorgesehen, dass sich eine Ausnehmung in Axialrichtung über das gesamte Magnetsegment erstreckt. Die Ausnehmung erstreckt sich von der Oberseite bis zur Unterseite und umgekehrt des Magnetsegments.

Ferner ist vorteilhaft, dass sich jede Ausnehmung in Umfangsrichtung betrachtet, vollständig über eine Übergangszone erstrecken. Jede Übergangszone ist vollständig in dem Bereich einer Ausnehmung ausgebildet. Ferner bewirkt die schräge Ausbildung der Übergangszone, dass die zwei durch die Übergangszone getrennten magnetisch unterschiedlich polarisierte Abschnitte, ebenfalls zumindest teilweise in dem Magnetsegment im Bereich der Ausnehmung ausgebildet sind.

Gemäß einer Weiterbildung der Erfindung erstreckt sich jede Übergangszone über die gesamte Breite der Ausnehmung in deren Bereich des Magnetsegments sie ausgebildet ist.

Gemäß einer vorteilhaften Ausführungsform der Erfindung ist vorgesehen, dass das Verhältnis der magnetisch unterschiedlich polarisierten Abschnitte eines Magnetsegments zu dem Magnetsegment 2n+1:1 beträgt. Es ergibt sich ein minimiertes Nutrasten. Ferner ergeben sich Kostenvorteile für eine elektrische Maschine.

Gemäß einer vorteilhaften Ausführungsform der Erfindung ist vorgesehen, dass das Verhältnis der Breite eines magnetisch unterschiedlich polarisierten Abschnitts zu der Breite einer Übergangszone zwischen 3 und 5, insbesondere zwischen 3,5 und 4,5 beträgt. Vorzugsweise entspricht die Breite eines Abschnitts oder die Breite einer Übergangszone der senkrechten Ausdehnung ausgehend von der schrägen Erstreckung entlang der Oberfläche des Magnetsegments. Vorzugsweise wird als Maß für die Bestimmung des Verhältnisses der größtmöglich Wert herangezogen.

Gemäß einer vorteilhaften Ausführungsform der Erfindung ist vorgesehen, dass die magnetische Polarisierung der Abschnitte in Umfangsrichtung abwechselnd ausgebildet ist. Es ergibt sich eine magnetisch abwechselnd polarisierte Polfolge in Umfangsrichtung. Vorzugsweise erstreckt sich die magnetisch abwechselnd polarisierte Polfolge über alle Magnetsegmente hinweg.

Gemäß einer bevorzugten Ausführungsform der Erfindung ist vorgesehen, dass die Magnetsegmente weitere, insbesondere zweite, Ausnehmungen auf der dem Stator zugewandten Seite aufweisen. Die weiteren Ausnehmungen sind jeweils in einem der beiden Randbereiche, insbesondere Randzonen, des Magnetsegments ausgebildet. Die Randbereiche sind die Bereiche des Magnetsegments, welche in Umfangsrichtung betrachtet an den Rand angrenzen. Es handelt sich also um die Bereiche, welche bei radialer Betrachtung des Magnetsegments ganz rechts und/oder ganz links liegen. Vorzugsweise entspricht die Ausdehnung der Randbereiche zwischen 1- bis 2-mal der Ausdehnung der weiteren Ausnehmung in Umfangsrichtung.

Eine vorteilhafte Weiterbildung ist, dass im Bereich der weiteren Ausnehmungen jeweils mindestens eine zweite Übergangszone ausgebildet ist. Die zweite Übergangszone verläuft insbesondere in Axialrichtung schräg. Die zweite Übergangszone stellt einen magnetisch unpolarisierten Bereich des Magnetsegments dar. Ferner bewirkt die schräge Ausbildung der zweiten Übergangszonen, dass der angrenzende magnetisch unterschiedlich polarisierte Abschnitt, ebenfalls zumindest teilweise in dem Magnetsegment im Bereich der Ausnehmung ausgebildet ist. Die zweiten Übergangszonen können gemäß einer Weiterbildung dreieckig ausgebildet sein. Vorzugsweise ist eine zweite Übergangszone, bei radialer Betrachtung im rechten unteren und eine im linken oberen Bereich der Ausnehmung ausgebildet. Die zweiten Übergangszonen sind in den diagonal gegenüberliegenden Ecken eines Magnetsegments ausgebildet. Vorteilhaft trennen die zweiten Übergangszonen einen kleinen magnetisch polarisierten Abschnitt von einem der der magnetisch polarisierten Abschnitte.

Der kleine magnetisch polarisierte Abschnitt ist insbesondere dreieckig ausgebildet. Der kleine magnetisch polarisierte Abschnitt ist in einem der Ecken des Magnetsegments ausgebildet.

Eine besonders vorteilhafte Weiterbildung der Erfindung ist, dass sich die weiteren Ausnehmungen in Axialrichtung über das gesamte Magnetsegment erstrecken. Die weiteren Ausnehmungen erstrecken sich von der Oberseite bis zur Unterseite und umgekehrt des Magnetsegments. Ferner ist vorteilhaft, dass sich jede weitere Ausnehmung in Umfangsrichtung betrachtet, vollständig über eine zweite Übergangszone erstrecken. Jede zweite Übergangszone ist vollständig in dem Bereich einer weiteren Ausnehmung ausgebildet.

Eine vorteilhafte Weiterbildung ist, dass die zweiten Übergangszonen sich über einen Umfangsluftspalt, der zwischen zwei Magnetsegmenten in Umfangsrichtung ausgebildet ist, hinweg erstrecken. Die zweiten Übergangszonen zweier Magnetsegmente und der Umfangsluftspalt bilden einen magnetisch unpolarisierten Bereich, entsprechend einer Übergangszone zwischen zwei unterschiedlich polarisierten Abschnitten der benachbarten Magnetsegmente.

Eine vorteilhafte Ausführungsform ist, dass die Übergangszonen parallel zueinander verlaufen. Vorzugsweise weisen alle Übergangszonen eines oder aller Magnetsegmente den gleichen Winkel gegenüber der Axialrichtung auf.

Eine vorteilhafte Weiterbildung ist, dass das Magnetsegment auf der dem Stator zugewandten Seite im Bereich der Ausnehmungen oder der weiteren Ausnehmungen radial oder elliptisch konkav ausgebildet ist.

Gemäß einer bevorzugten Ausführungsform der Erfindung ist vorgesehen, dass die Magnetsegmente auf der dem Stator zugewandten Seite, in Umfangsrichtung gesehen, zu den Rändern der Magnetsegmente hin, insbesondere tangential, verlaufende Abnahme der Dicke des Magnetsegments aufweisen. Vorzugsweise ist der Luftspalt in dem Randbereich des Magnetsegments ausgeweitet. Vorzugsweise ist das Magnetsegment in dem Randbereich radial oder elliptisch konkav ausgebildet. Vorzugsweise weist mindestens ein Magnetsegment, insbesondere alle Magnetsegmente, eine Ausweitung des Luftspalts, bei radialer Betrachtung, zum linken und zum rechten Rand des Magnetsegments hin, auf.

Ausführungsbeispiele sind in den Figuren dargestellt und in der nachfolgenden Beschreibung näher erläutert. Es zeigen:
- Figur 1: perspektivische Ansicht eines Stators und Rotors einer erfindungsgemäßen elektrischen Maschine,
- Figur 2: eine perspektivische Ansicht der Magnetsegmente,
- Figur 3: eine Schnittansicht durch ein Magnetsegment,
- Figur 4: eine perspektivische Ansicht des Stators und des Rotors der elektrischen Maschine ohne die Statorspulen,
- Figur 5a: der Verlauf der induzierten Spannung über den Drehwinkel eines aus dem Stand der Technik bekannten Elektromotors und
- Figur 5b: der Verlauf der induzierten Spannung über den Drehwinkel einer erfindungsgemäßen elektrischen Maschine.

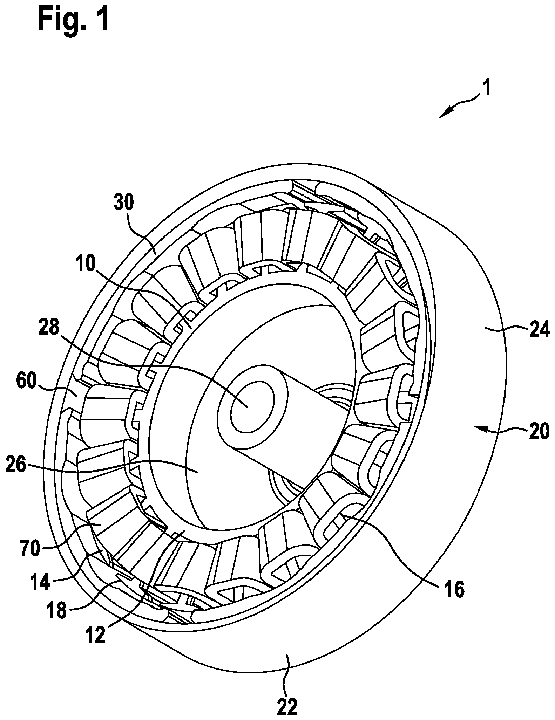

Eine erfindungsgemäße elektrische Maschine 1 umfasst einen Stator 10 und einen Rotor 20. In Figur 1 sind der Stator 10 und der Rotor 20 einer erfindungsgemäßen elektrischen Maschine 1 dargestellt. Weitere Komponenten einer elektrischen Maschine 1, wie beispielsweise eine Welle, bzw. eine Achse, eine Ansteuerelektronik sowie Gehäuseteile sind aufgrund der Übersichtlichkeit nicht dargestellt.

Die elektrische Maschine 1 ist insbesondere ein Elektromotor zum Antrieb eines Lüfters, vorzugsweise eines Lüfters zur Kühlung von Antriebskomponenten eines Kraftfahrzeugs. Die elektrische Maschine 1 kann auch zum Antrieb eines Lüfters in einem HVAC System, insbesondere eines Kraftfahrzeugs eingesetzt werden.

Der Rotor 20 umschließt den Stator 10 konzentrisch. Der Rotor 20 ist in Figur 1 beispielhaft radial außenliegend gegenüber dem Stator 10 ausgebildet. Der Rotor 20 ist gegenüber dem Stator 10 drehbar ausgebildet. Die elektrische Maschine 1 gemäß Figur 1 ist beispielhaft als Außenläufermotor ausgebildet.

Gemäß einer Weiterbildung kann die elektrische Maschine 1 auch als Innenläufer ausgebildet sein, wobei der Rotor konzentrisch von dem Stator umschlossen ist.

Der Stator 10 weist ein hohlzylindrisches Basiselement 12 auf. Das Basiselement 12 bildet ein magnetisches Rückschlusselement des Stators 10. Der Stator 10 umfasst eine Mehrzahl, hier insbesondere 18, Statorzähne 14. Die Statorzähne 14 sind über den Umfang des Basiselements 12 äquidistant angeordnet. Die Statorzähne 14 stehen radial von dem Basiselement 12 ab. Zwischen den Statorzähne 14 sind in Umfangsrichtung Nuten ausgebildet. Die einzelnen Statorzähne 14 berühren sich nicht. Die Nuten sind äquidistant verteilt ausgebildet. Vorzugsweise ist zwischen den Statorzähnen 14 ein magnetischer Fluss über das Basiselement 12 möglich.

Jeder Statorzahn 14 weist einen Zahnschaft 16 sowie einen Zahnkopf 18 auf. Auf die Zahnschäfte 16 ist mindestens eine Statorspule 70, die Wicklungen bilden, aufgewickelt. Jede Statorspule 70 wird Stirnseite einerseits von dem Zahnkopf 18 und andererseits von dem Basiselement 12 gehalten. Eine Bewegung der Statorspule in oder entgegen der Radialrichtung ist durch die Zahnköpfe 18 und/oder die Basiselemente 12 verhindert. Jeweils eine Statorspule 70 füllt zur Hälfte, die zum Statorzahn 14 benachbarte Nuten auf.

Das hohlzylindrisches Basiselement 12 und die Statorzähne 14 setzen sich aus einer Vielzahl von axial hintereinander gereihter, aneinander anliegender Blechlamellen zusammen. Die Blechlamellen sind insbesondere mittels Stanzpaketierung zusammengehalten.

Mittels geeigneter Bestromung der Statorspulen insbesondere über eine Ansteuerelektronik wird ein magnetisches Drehfeld erzeugt, welches den Rotor 20 mitreist. Zur Bestromung werden Brücken, insbesondere eine B6 Brücke aus elektrischen Schaltern, insbesondere MosFet oder Transistoren eingesetzt.

Der Rotor 20 weist einen Rotorkörper 22 auf. Der Rotorkörper 22 weist ein magnetisches Rückschlusselement 24 und ein Verbindungselement 26 auf. Das Verbindungselement 26 verbindet das Rückschlusselement 24 mit einer Wellenaufnahme 28.

Das magnetische Rückschlusselement 24, insbesondere auch als Rückschlussjoch bezeichnet, ist beispielhaft in Figur 1 hohlzylindrisch ausgebildet. Das Rückschlusselement 24 wirkt über mindestens ein Verbindungselement 26 mit einer Wellenaufnahme 28 zusammen. Das magnetische Rückschlusselement 24 und das Verbindungselement 26 bilden einen Zylindertopf. Die Mantelfläche des Zylindertopfs wird durch das Rückschlusselement 24 gebildet. Der Zylindertopfboden wird durch das Verbindungselement 26 gebildet. Das Verbindungselement 26 ist insbesondere als flacher vorzugsweise blechartiger Boden ausgebildet oder weist zumindest eine Speiche auf, die das hohlzylindrisches Rückschlusselement 24 mit der Wellenaufnahme 28 verbindet. Vorzugsweise weist das Verbindungselement 26 durchgängig verlaufende Ausnehmungen, insbesondere Löcher oder Schlitze auf, welche beispielsweise das Gewicht des Rotors 20 senken oder die Luftzirkulation verbessern oder Unwuchten ausgleichen.

Ferner weist der Rotor 20 mehrere Magnetsegmente 30 auf. Beispielhaft trägt der Rotor 20 gemäß Figur 1 vier Magnetsegmente 30. Die Magnetsegmente 30 sind insbesondere als Permanentmagnetsegmente, bzw. Dauermagnet ausgebildet. Die Magnetsegmente 30 sind schalenförmig ausgebildet. Der Außenumfang der Magnetsegmente ist an den Innenumfang des Rotorkörpers 22 angepasst.

Die Magnetsegmente 30 liegen insbesondere mit ihrem radial außenliegenden Umfang an dem Innenumfang des Rotorkörpers 22 an. Der Rotorkörper 22 und die Magnetsegmente sind insbesondere mittels einer Schweiß-, Klebe, Löt-, Steck-, Schraub- oder Nietverbindung usw. miteinander verbunden.

Vorzugsweise weisen die Magnetsegmente 30, insbesondere mindestens zwei, Auflagepunkte auf. Die Auflagepunkte erstrecken sich in Axialrichtung. Zwischen den Auflagepunkten und dem Rotorkörper 22 ist Klebstoff ausgebildet.

Die Magnetsegmente 30 sind über den Umfang äquidistant angeordnet.

Zwischen zwei in Umfangsrichtung benachbarte Magnetsegmente ist ein Umfangsluftspalt 60 ausgebildet. Die Anzahl der Umfangsluftspalte 60 entspricht der Anzahl an Magnetsegmenten 30. Der Außenumfang der Magnetsegmente ist radial konkav ausgebildet. Vorzugsweise entspricht die Grundform der Magnetsegmente 30 im Wesentlich einem Ausschnitt eines Hohlzylinders.

Zwischen den Magnetsegmenten 30 und den Zahnköpfen 18 ist ein Luftspalt ausgebildet.

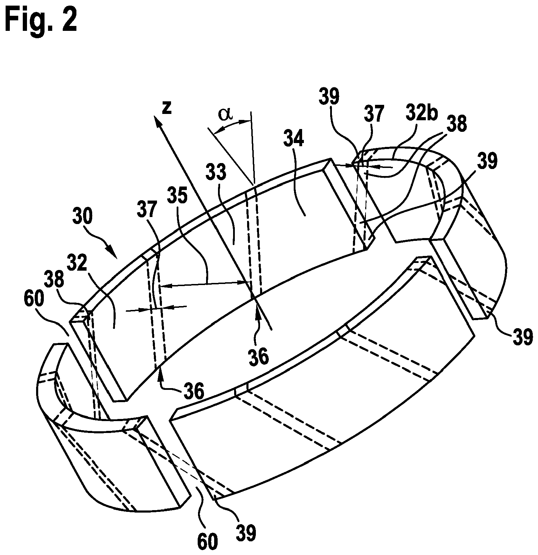

In Figur 2 ist eine perspektivische Ansicht der Magnetsegmente 30 gezeigt. Die Magnetsegmente 30 sind entsprechend ihrer Anordnung an dem Grundkörper 22 dargestellt. Die weiteren Komponenten der elektrischen Maschine 1 sind übersichtlichkeitshalber nicht dargestellt. Die Magnetsegmente 30 weisen in Umfangsrichtung jeweils mehrere magnetisch unterschiedlich polarisierte Abschnitte 32, 33, 34 auf. Die Polarisierung der Abschnitte erfolgt derart, dass sich in Umfangsrichtung entlang der dem Stator zugerichteten Oberfläche eine Polfolge ausbildet, also Nord-Süd-Nord usw.

Vorzugsweise ist die Form aller Magnetsegmente 30 einer elektrischen Maschine 1 gleich. Lediglich bei der Polarisierung der einzelnen Abschnitte der Magnetsegmente bestehen Unterschiede zwischen den Magnetsegmenten 30.

Die magnetisch unterschiedlich polarisierte Abschnitte 32, 33, 34 bilden jeweils einen magnetischen Pol des Rotor 20. Das Verhältnis er Pole des Rotors 20 zu den Magnetsegmenten 30 beträgt: 2n+1:1

Wobei n für eine natürliche Zahl steht. Jedes Magnetsegment 30 weist beispielsweise 3, 5, 7, 9, 11 usw. magnetische unterschiedlich polarisierte Abschnitte 32, 33, 34, insbesondere in Umfangsrichtung, auf. Die Polfolge ist in Umfangsrichtung Nord-Süd-Nord oder Süd-Nord-Süd. Insbesondere bei einer elektrischen Maschine 1 mit zwölf Polen auf vier Magnetsegmenten 30 ergibt sich eine Polfolge von Nord-Süd-Nord, Süd-Nord-Süd, Nord-Süd-Nord und Süd-Nord-Süd.

Dauermagnete besitzen jeweils einen Nord und einen Südpol. Die Abschnitte 32, 33, 34 sind derart polarisiert das auf der in Radialrichtung außenliegenden Oberfläche, also der dem Stator abgewandten Oberfläche der Gegenpol ausgebildet ist. Weist beispielsweise der Abschnitt 32 auf der dem Stator zugewandten Seite einen magnetischen Pluspol auf, so liegt auf der abgewandten Seite der magnetische Minuspol.

Jedes der Magnetsegmente 30 weist jeweils einen Rand an den sich in Umfangsrichtung gegenüberliegenden Enden der Magnetsegmente 30 auf. Unter dem Rand der Magnetsegmente wird, in Radialrichtung betrachtet das linke und das rechte Ende des Magnetsegments 30 verstanden. An die Ränder schließen die Randbereiche der Magnetsegmente 30 an.

Die in Umfangsrichtung betrachtet äußeren Abschnitte 32, 34 sind im Wesentlichen gleich groß ausgebildet. Die Abschnitte 32, 34 grenzen jeweils an einen Rand eines Magnetsegments an. Die äußeren Abschnitte sind jeweils teilweise in einem Randbereich der Magnetsegmente 30 ausgebildet. Vorzugsweise ist in jedem Randbereich ein Magnetsegment 30 ausgebildet.

Die Abschnitte 33, welche zwischen den beiden außenliegenden Abschnitten, bezogen auf die Umfangsrichtung liegen, werden im Folgenden als innenliegender Abschnitt bezeichnet. Innenliegende Abschnitte, sind die Abschnitte, welche nicht an den Rand angrenzen oder bis zu diesem verlaufen. Alle innenliegende Abschnitte 33 sind ebenfalls gleich groß ausgebildet. In der Ausbildung gemäß Figur 1 gibt es jedoch nur einen innenliegenden Abschnitt 33.

Unter gleich groß ist insbesondere zu verstehen, dass sie die gleiche Oberfläche, insbesondere die Oberfläche des Innenumfangs des Magnetsegments 30 belegen. Unter der Oberfläche des Innenumfangs eines Magnetsegments ist die Fläche des Magnetsegments 30 zu verstehen, die dem Stator 10 der elektrischen Maschine 1 zugerichtet ist.

Zwischen den unterschiedlich polarisierten Abschnitten 32, 33, 34 sind Übergangszonen 36 ausgebildet. Die Übergangszonen 36 sind magnetisch unpolarisiert ausgebildet. Insbesondere werden die Übergangszonen nicht bewusst magnetisch polarisiert. Sie weisen meist dennoch eine schwache magnetische Polarisierung auf. Im Idealfall sind die Übergangszonen 36 nicht magnetisch polarisiert ausgebildet. Die Übergangszonen 36 weisen keine Eigenschaften eines Dauermagneten auf. Die Übergangszonen sind nicht dauermagnetisiert. Die Übergangszonen bilden auch Polübergänge.

Vorzugsweise bilden die Übergangszonen nicht den Übergang zwischen Nord- und Südpol eines magnetisch polarisierten Abschnitts 32, 33, 34.

Die Breite 37 einer Übergangszone weist ein Verhältnis zur Breite 35 eines Abschnitts zwischen 1:3 und 1:5 auf. Die Breite entspricht der senkrechten Ausdehnung ausgehend von der schrägen Erstreckung entlang der Oberfläche des Magnetsegments 30.

Die magnetischen Übergangszonen 36 bilden insbesondere eine Trennung zwischen den Abschnitten 33, 33, 34. Die Übergangszonen 36 sind in Axialrichtung des Rotors 20 schräg, insbesondere verschränkt, ausgebildet. Die Übergangszonen 36 verlaufen gegenüber der Axialrichtung der elektrischen Maschine 1 schräg. Zwischen den Übergangszonen 36 und der Axialrichtung ist ein Winkel alpha ausgebildet. Der Winkel alpha ist insbesondere 18 bis 20 Grad, vorzugsweise ca. 19 Grad. Der Winkel alpha ist abhängig von dem Schrägungswinkel. Der Schrägungswinkel ist insbesondere 11 bis 13 Grad, vorzugsweise ca 11,8 Grad. Der Schrägungswinkel ist abhängig von der Topologie der elektrischen Maschine 1. Vorzugsweise ist der Winkel alpha abhängig von der Topologie der elektrischen Maschine 1.

Die Axialrichtung z des Rotors 20 verläuft parallel zur Welle. Vorzugsweise überlappen sich die Abschnitte 32, 33, 34 in Axialrichtung. Die ersten Übergangszonen 36 eines Magnetsegments 30 verlaufen parallel zueinander. Die ersten Übergangszonen 36 eines Magnetsegments 30 erstrecken sich über die gesamte axiale Ausdehnung des Magnetsegments 30. Die ersten Übergangszonen sind in Radialrichtung durchgängig ausgebildet.

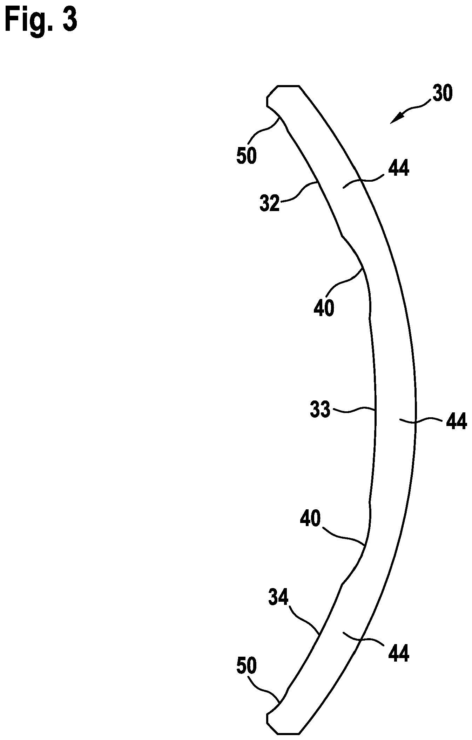

In Figur 3 ist eine Schnittansicht durch ein Magnetsegment 30 entsprechend Figur 1 und Figur 2 dargestellt. Das Magnetsegment 30 weist ebenfalls drei Abschnitte 32, 33, 34 auf. Im Bereich der ersten Übergangszonen 36 sind Ausnehmungen 40 ausgebildet. Die Ausnehmungen 40 sind auf der dem Stator zugewandten Seite des Magnetsegments 30 ausgebildet. Die Ausnehmungen 40 bilden insbesondere Polabhebungen. Die ersten Übergangszonen 36 verlaufen im Bereich der Ausnehmungen 40. Vorzugsweise sind die ersten Übergangszonen 36 vollständig im Bereich einer Ausnehmungen 40 eines Magnetsegments 30 ausgebildet.

Gemäß einer Weiterbildung erstrecken sich die Ausnehmungen zumindest über einen Teil der ersten Übergangszonen.

In Figur 3 ist ein Magnetsegment 30 mit drei magnetisch unterschiedlich polarisierten Abschnitten 32, 33, 34 gezeigt. Die Abschnitte 32, 33, 34 sind teilweise im Bereich der Ausnehmungen 40 ausgebildet. Insbesondere ergibt sich je nach Schräge der ersten Übergangszonen 36 eine Überlagerung in Axialrichtung zweier benachbarter Abschnitte.

Gemäß einer optionalen Weiterbildung der Erfindung weisen die beiden in Umfangsrichtung außenliegenden Abschnitte 32, 34 eine zum Rand des Magnetsegments 30 hin tangential leicht ausweitende Kontur auf. Die leicht ausweitende Kontur führt zu einem radial oder elliptisch konkav ausgebildeten Randbereich des Magnetsegments 30. Ferner ist die Dicke des Magnetsegments 30 tangential zum Rand des Magnetsegments 30 abnehmend ausgebildet Das Magnetsegment 30 ist vorzugsweise in Umfangsrichtung betrachtet an seinem Mittelpunkt am dicksten ausbildet. Vorzugsweise ist das Magnetsegment im Bereich der inneren Abschnitte 33 am dicksten.

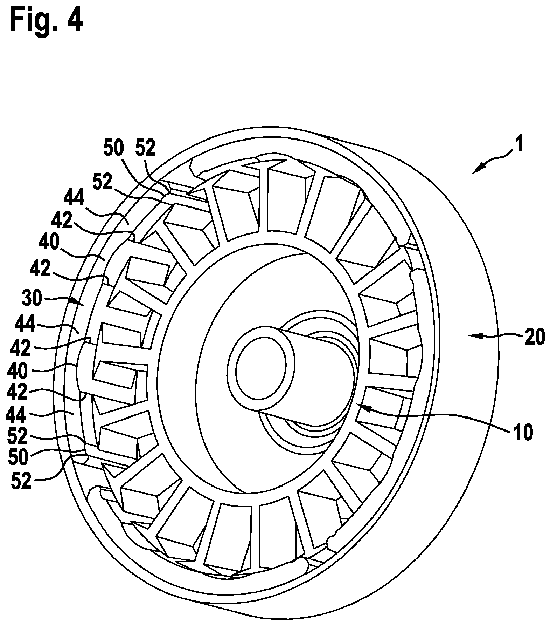

In Figur 4 ist eine perspektivische Ansicht des Stators 10 und des Rotors 20 der elektrischen Maschine 1 ohne die Statorspulen 70 dargestellt. Die Ausnehmungen 40 erstrecken sich in Axialrichtung des Rotors 20 über das gesamte Magnetsegment 30.

Die Randbereiche 42 der Ausnehmungen 40 sind parallel zu Axialrichtung des Rotors 20 ausgebildet. In Umfangsrichtung erstreckt sich jede Ausnehmung 40 zumindest über die Ausdehnung einer Übergangszone 36 in Umfangsrichtung. Gemäß einer Weiterbildung entspricht die Erstreckung der Ausnehmungen 40 in Umfangsrichtung der Erstreckung der Teile 44 des Magnetsegments 30 in Umfangsrichtung, die zwischen zwei Ausnehmungen 40 ausgebildet sind. Die Erstreckung der Ausnehmungen 40 in Umfangsrichtung eines Magnetsegments 30, insbesondere aller Magnetsegmente 30 eines Rotors 20, sind gleich. Die Erstreckung der Teile 44 des Magnetsegments 30 in Umfangsrichtung, die zwischen zwei Ausnehmungen 40 ausgebildet sind, ist gleich.

Gemäß einer Weiterbildung ist die Erstreckung aller Teile des Magnetsegments 30 ohne Ausnehmungen 40 oder weitere Ausnehmungen 50 in Umfangsrichtung im Wesentlichen gleich.

Die Dicke der Magnetsegmente 30 im Bereich der Ausnehmungen 40 ist geringer als in den Teilen 44 zwischen den Ausnehmungen.

Im Bereich der Ausnehmungen 40 ist das Magnetsegment konkav ausgebildet.

Beispielhaft ist dies in Figur 3 dargestellt. Im Bereich der Ausnehmungen 40 ist das Magnetsegment 30 insbesondere radial oder elliptisch konkav ausgebildet. Die Ausnehmungen 40 bilden eine Polabhebung.

Das Verhältnis zwischen der Breite eines Abschnitts 32, 33, 34 zu der Breite eine Übergangszone beträgt zwischen 3 und 5 zu 1.

Die magnetische Polarisierung der Abschnitte 32, 33, 34 aller Magnetsegmente 30 wechselt sich in Umfangsrichtung ab.

Gemäß einer Weiterbildung der Erfindung weisen die Magnetsegmente 30 weitere Ausnehmungen 50 auf. In Figur 4 sind die weiteren Ausnehmungen mit dem Bezugszeichen 50 dargestellt. Die weiteren Ausnehmungen 50 sind in den Randbereichen der Magnetsegmente 30 ausgebildet.

Die weiteren Ausnehmungen 50 sind auf der dem Stator 10 zugewandten Seite des Magnetsegments 30 ausgebildet. Die weiteren Ausnehmungen 50 führen zu einer Aufweitung des Luftspaltes zwischen Rotor 20 und Stator 10. Die weiteren Ausnehmungen 50 erstrecken sich über die gesamte axiale Ausdehnung eines Magnetsegments 30 in dem sie ausgebildet sind. Die Randbereiche 52 der weiteren Ausnehmungen 50 verlaufen parallel zur Axialrichtung. Im Bereich der weiteren Ausnehmungen 50 weist das Magnetsegment 30 eine geringere Dicke auf als im Bereich ohne Ausnehmungen 44.

Im Bereich der weiteren Ausnehmungen 50 weist das Magnetsegment 30 eine radial oder elliptisch konkave Ausbildung auf. Der Radius der radial konkaven Ausbildung ist kleiner, insbesondere um ¼ kleiner als der Radius der Ausnehmungen 40.

Die Ausnehmungen 40 und die weiteren Ausnehmungen 50 bilden eine Polabhebung.

Im Bereich der weiteren Ausnehmungen 50 sind zweite Übergangszonen 38 ausgebildet. Die zweiten Übergangszonen 38 sind in Axialrichtung schräg verlaufend ausgebildet. Die zweiten Übergangszonen 38 weisen insbesondere eine dreieckige Form auf. Insbesondere ist pro weitere Ausnehmung 50 eine weitere Übergangszone 38 ausgebildet.

Gemäß einer Weiterbildung der Erfindung ist ein magnetisch polarisierter Abschnitt 39 in der Ecke zwischen einer zweiten Übergangszone 38 und der Ecke des Magnetsegments 30 ausgenbildet. Ein solcher Abschnitt 39 ist ebenfalls in der diagonal gegenüberliegenden Ecke des Magnetsegments ausgebildet.

In Figur 2 sind beispielhaft zwei zweite Übergangszonen 38 jeweils in den Randbereichen des Magnetsegments 30 ausgebildet.

Die Magnetsegmente 30 sind durch den Umfangsluftspalt 60 voneinander getrennt. Die einander benachbarten zweiten Übergangszonen 38 zweier Magnetsegmente 30, die durch den Umfangsluftspalt voneinander getrennt sind, bilden über den Umfangsluftspalt hinweg eine weitere Übergangszone 37. Die weitere Übergangszone 37 erstreckt sich teilweise über die beiden Magnetsegmente 30 sowie über den Umfangsluftspalt 60. Entsprechend den Übergangszonen 36 trennen die weiteren Übergangszonen 37 ebenfalls zwei magnetisch unterschiedlich polarisierte Abschnitte, beispielsweise entsprechend Figur 2 die Abschnitte 34, 32a.

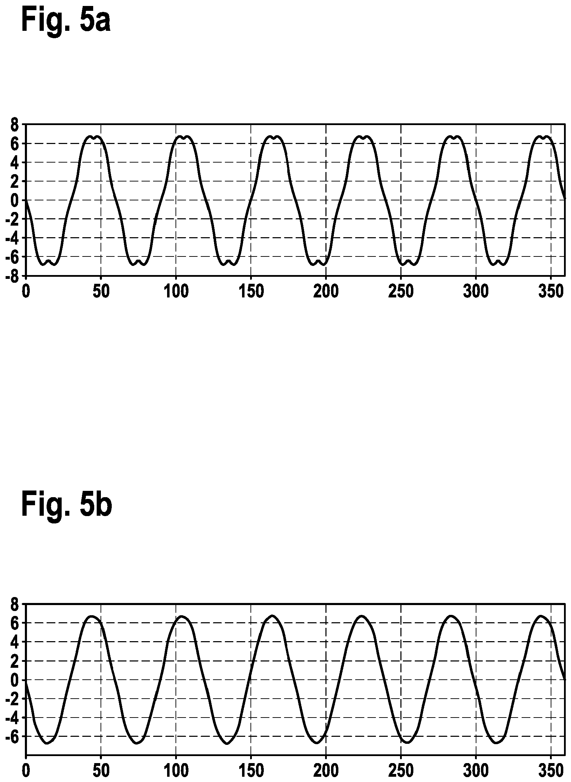

In Figur 5a ist die induzierte Spannung eines aus dem Stand der Technik bekannten Elektromotors dargestellt. In x-Richtung des Diagramms ist der Drehwinkel in Grad dargestellt. In y-Richtung ist die induzierte Spannung dargestellt. Abhängig von der induzierten Spannung ist die Drehmomentwelligkeit, insbesondere das Electric torque ripple ETR.

In Gegensatz hierzu ist in Figur 5b die induzierte Spannung einer erfindungsgemäßen elektrischen Maschine 1 dargestellt. Die Welligkeit im Scheitelbereich ist nicht gegeben.

Insgesamt kann das Rastmomente um 50 % und mehr gegenüber dem im Stand der Technik bekannten Elektromotoren mit einer erfindungsgemäßen elektrischen Maschine 1 gesenkt werden.

## Patentansprüche

1. Elektrische Maschine (1) umfassend einen Stator (10) und einen vom Stator (10) durch einen Luftspalt getrennten Rotor (20), wobei der Rotor (20) mehrere an einem Rotorkörper (22) befestigte schalenförmigen Magnetsegmenten (30) aufweist, und wobei die Magnetsegmente (30) in Umfangsrichtung jeweils mehrere magnetisch unterschiedlich polarisierte Abschnitte (32, 33, 34) aufweisen, welche jeweils einen magnetischen Pol des Rotors (20) bilden, und wobei erste Übergangszonen (36) zwischen den magnetisch unterschiedlich polarisierten Abschnitten (32, 33, 34) der Magnetsegmente (30) ausgebildet sind, wobei sich die ersten Übergangszonen (36) über die gesamte axiale Ausdehnung der Magnetsegmente (30) erstrecken, wobei Ausnehmungen (40) in den Magnetsegmenten, auf der dem Stator (10) zugewandten Seite vorgesehen sind, **dadurch gekennzeichnet, dass** die ersten Übergangszonen (36) in Axialrichtung des Rotors (20) schräg verlaufend ausgebildet sind, und dass die ersten Übergangszonen (36) im Bereich der Ausnehmungen (40) ausgebildet sind und dass Randbereiche (42) der Ausnehmungen (40) in Umfangsrichtung parallel zur Axialrichtung verlaufen.

2. Elektrische Maschine (1) nach dem vorhergehenden Anspruch, **dadurch gekennzeichnet, dass** sich eine Ausnehmung (40) in Axialrichtung über das gesamte Magnetsegment (30) und in Umfangsrichtung vollständig über eine erste Übergangszone (36) erstreckt.

3. Elektrische Maschine (1) nach einem der vorhergehenden Ansprüche,
**dadurch gekennzeichnet, dass** das Verhältnis der magnetisch unterschiedlich polarisierten Abschnitte (32, 33, 34) eines Magnetsegments (30) zu dem Magnetsegment 2n+1:1 beträgt.

4. Elektrische Maschine (1) nach einem der vorhergehenden Ansprüche, **dadurch gekennzeichnet, dass** das Verhältnis der Breite eines Abschnitts (32, 33, 34) zur der Breite einer ersten Übergangszone (36) zwischen 2 und 2,5 beträgt.

5. Elektrische Maschine (1) nach einem der vorhergehenden Ansprüche, **dadurch gekennzeichnet, dass** die magnetische Polarisierung der Abschnitte (32, 33, 34) in Umfangsrichtung abwechselnd ausgebildet ist.

6. Elektrische Maschine (1) nach einem der vorhergehenden Ansprüche, **dadurch gekennzeichnet, dass** die Magnetsegmente (30) weitere Ausnehmungen (50) auf der dem Stator (10) zugewandten Seite aufweisen, und dass in Umfangsrichtung gesehen, jeweils eine weitere Ausnehmung (50) in einem der beiden Randbereich des Magnetsegments (30) ausgebildet ist.

7. Elektrische Maschine (1) nach Anspruch 6,
**dadurch gekennzeichnet, dass** im Bereich der weiteren Ausnehmungen (50) jeweils mindestens eine zweite Übergangszone (38) ausgebildet ist, die insbesondere in Axialrichtung schräg verlaufen.

8. Elektrische Maschine (1) nach Anspruch 7,
**dadurch gekennzeichnet, dass** sich die weiteren Ausnehmungen (50) in Axialrichtung über das gesamte Magnetsegment (30) und in Umfangsrichtung vollständig über eine zweite Übergangszone (38) erstrecken.

9. Elektrische Maschine (1) nach Anspruch 7 oder 8,
**dadurch gekennzeichnet, dass** die zweiten Übergangszonen (38) sich über einen Umfangsluftspalt (60), der zwischen zwei Magnetsegmenten (30) in Umfangsrichtung ausgebildet ist, hinweg erstrecken und so eine Übergangszone zwischen zwei unterschiedlich polarisierten Abschnitten (34, 32a) der benachbarten Magnetsegmente (30) bilden.

10. Elektrische Maschine (1) nach einem der vorhergehenden Ansprüche, **dadurch gekennzeichnet, dass** die ersten Übergangszonen (36) parallel zueinander verlaufen.

11. Elektrische Maschine (1) nach einem der vorhergehenden Ansprüche, **dadurch gekennzeichnet, dass** das Magnetsegment (30) auf der dem Stator (10) zugewandten Seite im Bereich der Ausnehmungen (40) oder der weiteren Ausnehmungen (50) radial oder elliptisch konkav ausgebildet ist.

12. Elektrische Maschine (1) nach einem der vorhergehenden Ansprüche, **dadurch gekennzeichnet, dass** die Magnetsegmente (30) auf der dem Stator (10) zugewandten Seite, in Umfangsrichtung gesehen, zu den Rändern der Magnetsegmente (30) hin, insbesondere tangential, verlaufende Aufweitung des Luftspalts aufweisen, die insbesondere radial oder elliptisch konkav ausgebildet sind.

## Claims

1. Electric machine (1) comprising a stator (10) and a rotor (20) separated from the stator (10) by an air gap, wherein the rotor (20) has multiple shell-like magnet segments (30) fastened to a rotor body (22), and wherein the magnet segments (30) each have, in the circumferential direction, multiple magnetically differently polarized sections (32, 33, 34) which each form a magnetic pole of the rotor (20), and wherein first transition zones (36) are formed between the magnetically differently polarized sections (32, 33, 34) of the magnet segments (30), wherein the first transition zones (36) extend over the entire axial extent of the magnet segments (30), wherein recesses (40) are provided in the magnet segments on the side facing the stator (10), **characterized in that** the first transition zones (36) are designed to extend obliquely in the axial direction of the rotor (20), and **in that** the first transition zones (36) are formed in the region of the recesses (40), and **in that** edge regions (42) of the recesses (40) in the circumferential direction extend parallel to the axial direction.

2. Electric machine (1) according to the preceding claim, **characterized in that** a recess (40) extends across the entire magnet segment (30) in the axial direction and completely across a first transition zone (36) in the circumferential direction.

3. Electric machine (1) according to either of the preceding claims, **characterized in that** the ratio between the magnetically differently polarized sections (32, 33, 34) of a magnet segment (30) and the magnet segment is 2n+1:1.

4. Electric machine (1) according to one of the preceding claims, **characterized in that** the ratio between the width of a section (32, 33, 34) and the width of a first transition zone (36) is between 2 and 2.5.

5. Electric machine (1) according to one of the preceding claims, **characterized in that** the magnetic polarization of the sections (32, 33, 34) is designed to alternate in the circumferential direction.

6. Electric machine (1) according to one of the preceding claims, **characterized in that** the magnet segments (30) have further recesses (50) on the side facing the stator (10), and **in that** a respective further recess (50) is formed in one of the two edge regions of the magnet segment (30), as viewed in the circumferential direction.

7. Electric machine (1) according to Claim 6, **characterized in that** at least one second transition zone (38) is formed in the region of each of the further recesses (50), which second transition zones (38) in particular extend obliquely in the axial direction.

8. Electric machine (1) according to Claim 7, **characterized in that** the further recesses (50) extend across the entire magnet segment (30) in the axial direction and completely across a second transition zone (38) in the circumferential direction.

9. Electric machine (1) according to Claim 7 or 8, **characterized in that** the second transition zones (38) extend across a circumferential air gap (60), which is formed between two magnet segments (30) in the circumferential direction, and thus form a transition zone between two differently polarized sections (34, 32a) of the adjacent magnet segments (30).

10. Electric machine (1) according to one of the preceding claims, **characterized in that** the first transition zones (36) extend parallel to each other.

11. Electric machine (1) according to one of the preceding claims, **characterized in that** the magnet segment (30) is of radially or elliptically concave form on the side facing the stator (10) in the region of the recesses (40) or of the further recesses (50).

12. Electric machine (1) according to one of the preceding claims, **characterized in that** the magnet segments (30) have, on the side facing the stator (10), as viewed in the circumferential direction, widenings of the air gap which extend toward the edges of the magnet segments (30), in particular tangentially, and which are in particular of radially or elliptically concave form.

## Revendications

1. Machine électrique (1) comprenant un stator (10) et un rotor (20) séparé du stator (10) par un entrefer, le rotor (20) présentant plusieurs segments magnétiques (30) en forme de coque fixés à un corps de rotor (22), et les segments magnétiques (30) présentant chacun dans la direction circonférentielle plusieurs sections (32, 33, 34) polarisées magnétiquement de manière différente, qui forment chacune un pôle magnétique du rotor (20), et des premières zones de transition (36) étant réalisées entre les sections (32, 33, 34) polarisées magnétiquement de manière différente des segments magnétiques (30), les premières zones de transition (36) s'étendant sur l'ensemble de l'étendue axiale des segments magnétiques (30), des évidements (40) étant prévus dans les segments magnétiques, sur le côté tourné vers le stator (10), **caractérisée en ce que** les premières zones de transition (36) sont réalisées en oblique dans la direction axiale du rotor (20), et **en ce que** les premières zones de transition (36) sont réalisées dans la zone des évidements (40) et **en ce que** des zones de bord (42) des évidements (40) s'étendent dans la direction circonférentielle parallèlement à la direction axiale.

2. Machine électrique (1) selon la revendication précédente, **caractérisée en ce qu'**un évidement (40) s'étend dans la direction axiale sur l'ensemble du segment magnétique (30) et dans la direction circonférentielle entièrement sur une première zone de transition (36).

3. Machine électrique (1) selon l'une quelconque des revendications précédentes, **caractérisée en ce que** le rapport entre les sections (32, 33, 34) polarisées magnétiquement de manière différente d'un segment magnétique (30) et le segment magnétique est de 2n+1:1.

4. Machine électrique (1) selon l'une quelconque des revendications précédentes, **caractérisée en ce que** le rapport entre la largeur d'une section (32, 33, 34) et la largeur d'une première zone de transition (36) est compris entre 2 et 2,5.

5. Machine électrique (1) selon l'une quelconque des revendications précédentes, **caractérisée en ce que** la polarisation magnétique des sections (32, 33, 34) est réalisée sous forme alternée dans la direction circonférentielle.

6. Machine électrique (1) selon l'une quelconque des revendications précédentes, **caractérisée en ce que** les segments magnétiques (30) présentent d'autres évidements (50) sur le côté tourné vers le stator (10), et **en ce que**, vu dans la direction circonférentielle, un autre évidement (50) est formé respectivement dans l'une des deux zones de bord du segment magnétique (30).

7. Machine électrique (1) selon la revendication 6, **caractérisée en ce que,** dans la zone des autres évidements (50), au moins une deuxième zone de transition (38) est respectivement réalisée, qui s'étend notamment en oblique dans la direction axiale.

8. Machine électrique (1) selon la revendication 7, **caractérisée en ce que** les autres évidements (50) s'étendent dans la direction axiale sur l'ensemble du segment magnétique (30) et dans la direction circonférentielle entièrement sur une deuxième zone de transition (38).

9. Machine électrique (1) selon la revendication 7 ou 8, **caractérisée en ce que** les deuxièmes zones de transition (38) s'étendent à travers un entrefer circonférentiel (60) qui est réalisé entre deux segments magnétiques (30) dans la direction circonférentielle, et forment ainsi une zone de transition entre deux sections polarisées de manière différente (34, 32a) des segments magnétiques voisins (30).

10. Machine électrique (1) selon l'une quelconque des revendications précédentes, **caractérisée en ce que** les premières zones de transition (36) sont parallèles entre elles.

11. Machine électrique (1) selon l'une quelconque des revendications précédentes, **caractérisée en ce que** le segment magnétique (30) est réalisé sous forme radialement ou elliptiquement concave sur le côté tourné vers le stator (10) dans la zone des évidements (40) ou des autres évidements (50).

12. Machine électrique (1) selon l'une quelconque des revendications précédentes, **caractérisée en ce que** les segments magnétiques (30) présentent sur le côté tourné vers le stator (10), vu dans la direction circonférentielle, un élargissement de l'entrefer s'étendant vers les bords des segments magnétiques (30), notamment tangentiellement, qui sont notamment réalisés sous forme radialement ou elliptiquement concave.
